# EUROPEAN PATENT SPECIFICATION

(11) **EP 0 259 038 B1**
(45) Date of publication and mention of the grant of the patent: **10.03.1993**
(21) Application number: 87307168.2
(22) Date of filing: 13.08.1987
(51) Int. Cl.: C02F 5/08, C02F 1/68, F24D 19/00

(54) **Dispenser for water conditioning material**
Spender für Wasserbehandlungsstoffe
Doseur pour matériaux de conditionnement de l'eau

(30) Priority: 05.09.1986 GB 8621408
(43) Date of publication of application: 09.03.1988
(73) Proprietor: CISTERMISER LIMITED, Woodley Reading Berks RG3 5AN (GB)
(72) Inventor: North, Alan, Nr. Wargrave Berks, RG10 8QS (GB)
(74) Representative: Abbie, Andrew Kenneth

(56) References cited:
- EP-A- 0 012 199
- GB-A- 736 014
- GB-A- 2 096 587
- US-A- 3 864 090

## Description

This invention concerns a dispenser for water conditioning material, for example for a slow dissolving silico-phosphate material for inhibiting the build up of scale in water carrying pipes and apparatus.

It is already known in hot water systems to fit dispensers for supplying scale inhibiting material into the water in order to prevent or discourage the build up of scale in the water pipes. The build up of scale in pipes in domestic hot water systems, in particular in the pipes used in heat exchanger elements, is especially a problem because of the narrow bores employed in the pipes, and a variety of dispensers for scale inhibiting material have been proposed for such systems.

A conventional dispenser for use in a domestic hot water system generally comprises a container, a closable opening for filling and replenishing the container with scale inhibiting material, and connectors for connecting the container into the water system so that water flowing in the system passes through the container and is conditioned by the scale inhibiting material therein.

For effective results the scale inhibiting material must be replenished at regular intervals, and consequently the contents of the dispenser must be checked frequently. Since the dispenser is often mounted out of the way in an attic or concealed beneath a sink, such checking is inconvenient. Furthermore, another drawback of conventional dispensers is that the water supply must be manually cut off in order to replenish the container. For example, the pipes on either side of the dispenser must be closed by appropriate taps. This is also inconvenient.

Published European Patent Application No. EP-A1-0012199 discloses apparatus for dispersing fluid-soluble material into a fluid stream within a pipeline, the apparatus comprising a replenishable container for receiving the material, the container being provided with a series of openings to permit the fluid to pass into and out of the container, an access opening provided on the container for allowing replenishment of the material, a closure removably fitted over the access opening and a valve arrangement comprising a seal on the container actuable for closing off fluid flow through the container in response to loosening of the closure but before the closure is completely removed. However, this system suffers from the disadvantage that, during replenishment, untreated fluid continues to flow in the pipeline.

The present invention provides a dispenser for dispensing a water conditioning material into a water system comprising a replenishable container for receiving the water conditioning material, said container being provided with connectors for connecting the dispenser into a pipeline of the water system, an access opening provided on said container for allowing replenishment of water conditioning material, a closure removably fitted to said access opening, a hood removably fitted to said container to prevent removal of said closure, and valves actuable for closing off water flow through the dispenser and between the connectors, thereby in use preventing flow of water through the pipeline, means being provided for actuating said valves in response to removal of said hood, thereby to close off the water flow before removal of said closure.

A significant advantage of the invention is that the dispenser is particularly safe to use and easy to reload because the water supply is automatically shut off from the container when this is opened to be replenished.

In a preferred embodiment of the invention, the hood is provided with operating elements arranged to act on the valves by way of lever linkages.

In the preferred embodiment the valves are resiliently biased towards a closed condition and are arranged to be held open by the hood when the hood is mounted over the closure for the replenishment opening.

The dispenser may further comprise a base on which the replenishable container is supported and which is engageable by the hood for mounting the hood over the closure for the replenishment opening.

In this case, the replenishable container may be adjustable relative to the base for orienting the replenishment opening in a selected position.

Advantageously, the hood may be selectively engageable with the base in a plurality of different orientations.

The dispenser may comprise two pairs of said connectors, each pair being arranged for connecting the container into the water system and the two pairs being disposed for different connection arrangements.

A further feature, which may be included in the dispenser, is a water flow regulating device. By providing such a device in the replenishable container, the flow of water over the water conditioning material in use can be directed for optimum efficiency.

One embodiment of the invention features a water flow regulating device in the form of a plate mounted over an inlet to and outlet from the replenishable container, the plate being formed with a first nozzle aligned with the inlet and with a second nozzle offset from the outlet and being arranged to cooperate with the wall of the container to form a flow passage from the inlet through the first nozzle to the interior of the container and by way of the second nozzle to the outlet of the container.

The two nozzles may be formed with apertures in their sides for directing water out of their sides as well as from their ends. In this case, the apertures may increase in size towards the tips of the nozzles.

Conveniently, the invention also features a transparent replenishable container so that the water conditioning material therein in use is visible and it is readily apparent when replenishment is needed.

In this instance, the hood may have a decorative function so that the dispenser can be attractively mounted on a wall ion the kitchen or other visible place where its contents can be monitored and replenished without inconvenience.

In order that the invention may be better understood, the preferred embodiment is described in detail below, by way of example only, with reference to the accompanying drawings, in which:
Figure 1 is a perspective view of a dispenser for water conditioning material, in accordance with the invention;
Figure 2 is a perspective view of a hood of the dispenser shown in Figure 1;
Figure 3 is an exploded perspective view of a base and container of the dispenser shown in Figure 1;
Figure 4 is a plan view of the base and part of the container shown in Figure 3;
Figure 5 is a section taken along the line V-V in Figure 4;
Figure 6 is an exploded fragmentary view, partly in section, of the hood and base of the dispenser;
Figure 7 is a view taken along the line VII-VII in Figure 6;
Figure 8 is a fragmentary view, partly in section, corresponding to Figure 6 but showing the hood engaged with the base; and
Figure 9 is a section taken along the line IX-IX in Figure 4.

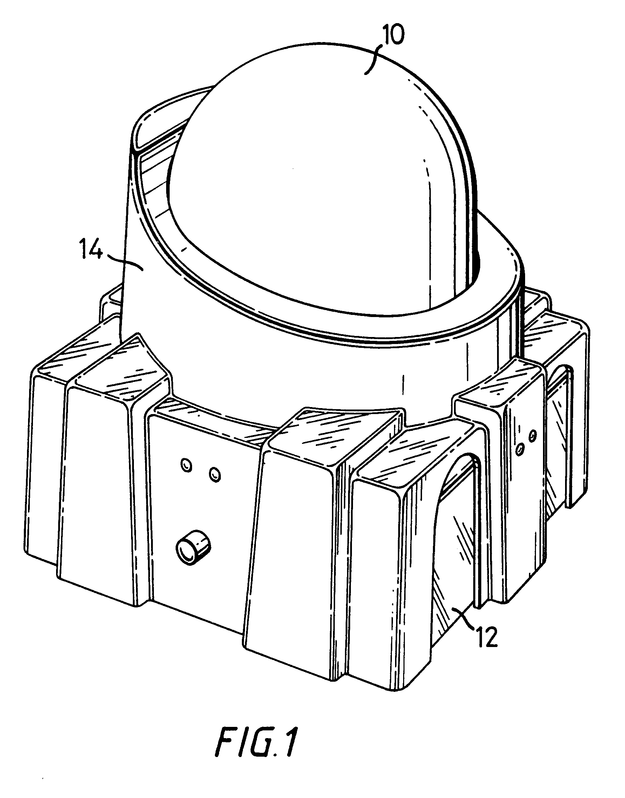

Referring initially to Figures 1 to 3, a dispenser for water conditioning material comprises a container 10, which includes a base 12, and a hood 14, which is engageable with the base 12 for partially covering the container 10.

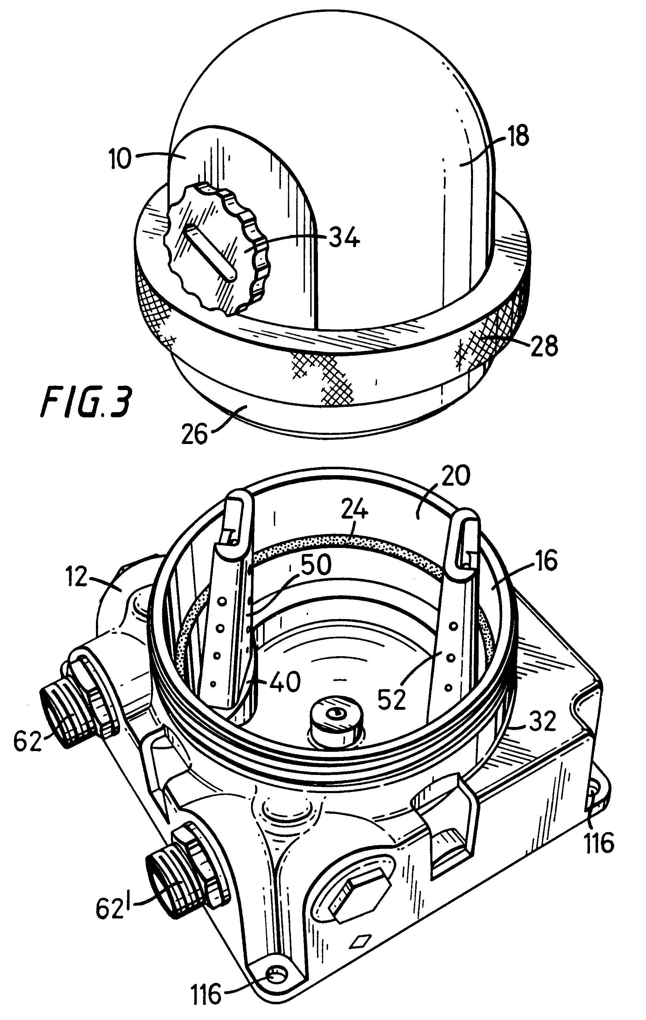

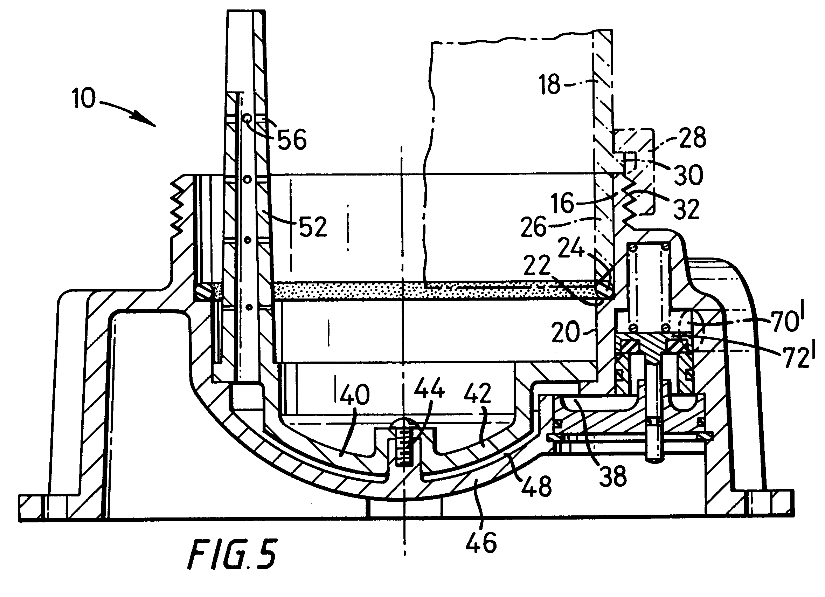

As shown in Figure 3, the container 10 comprises a first part 16 integrally formed with the base 12, and a second part 18 in the form of a dome. The first part 16 has a stepped cylindrical interior 20 (best seen in Figure 5) providing a shoulder 22. A sealing ring 24 is seated on the shoulder 22. The second part 18 has a cylindrical end 26, which is a snug sliding fit within the enlarged section of the cylindrical interior 20 of the first part 16. An internally threaded collar 28 is provided on the second part 18 and is arranged to engage both an annular flange 30 on the second part 18 and an external thread 32 on the first part 16 for holding the two parts together. By tightening the collar 28 onto the external thread 32, the end portion 26 of the second part 18 can be made to seat firmly onto the sealing ring 24 whereby to ensure that a positive seal is provided between the two parts.

The orientation of the domed second part 18 of the container 10 relative to the base 12 can be adjusted, for a reason which will become apparent later, merely by loosening the collar 28 on the external thread 32 and rotating the domed second part 18 of the container 10 to a suitable position. Following this, the collar 28 is tightened once again to seal the container 10.

The domed second part 18 of the container 10 is further provided with an access opening into which is fitted a closure in the form of a threaded filling plug 34, which can be removed for filling the container 10 with a water conditioning material such as a scale inhibitor. Preferably, a slow dissolving silico-phosphate material provided in the form of solid balls is employed as a scale inhibitor. Such silico-phosphate material needs to be replenished at regular intervals and, in order to display the state of such material within the container 10, the domed second part 18 of the container is transparent. The condition of the silico-phosphate material can thus be viewed for establishing at any particular point whether or not replenishment is necessary.

It will be seen that the hood 14 covers the closure plug 34 of the container 10 so that the container 10 can only be replenished if the hood 14 is removed from the base 12. The mounting of the hood 14 on and removal of the hood 14 from the base 12 is described below.

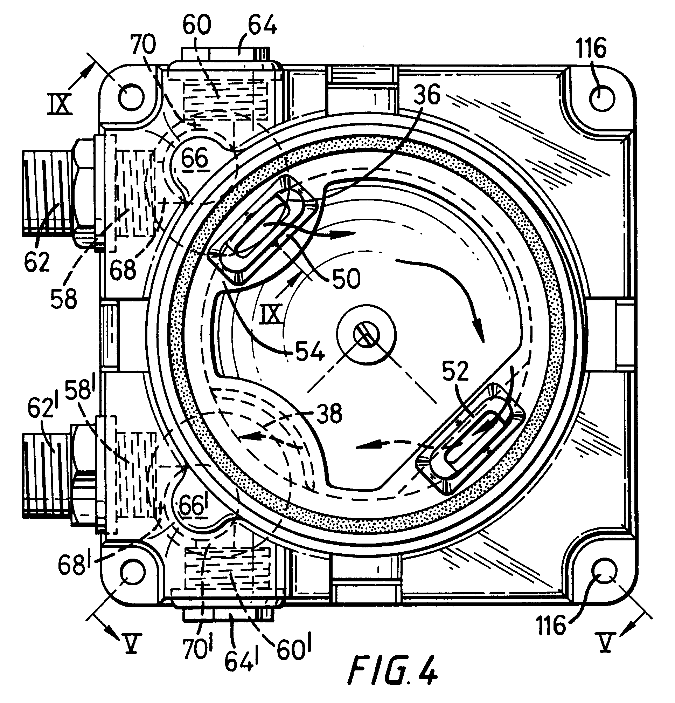

Turning now to Figure 4, the first part 16 of the container 10 is formed with a generally segmentally shaped inlet 36 (shown in dashed lines) for water and a generally segmentally shaped outlet 38 (also shown in dashed lines) for water.

In order to direct the flow of water within the container 10 to provide a swirling flow throughout the entire container and thereby ensure that the water is diffused over a maximum surface area of the scale inhibitor in the container in use, a flow regulating device 40 is mounted within the container 10 as illustrated in Figures 3 to 5.

This flow regulating device 40 comprises a dished plate 42 secured by a screw 44 to a dished end section 46 of the first container part 16. The dished plate 42 and the dished end section 46 are arranged to be spaced from one another to provide a passage 48 for water as described below. The flow regulating device 40 further comprises two nozzles 50 and 52. The nozzle 50 directly overlies the inlet 36 to receive the flow of water supplied to the inlet and direct this flow into the domed second part 18 of the container 10. The nozzle 52 is diametrically opposed to the nozzle 50 and offset from the outlet 38. The passage 48 provided between the dished plate 42 of the flow regulating device 40 and the dished end section 46 of the container 10 communicates the nozzle 52 with the outlet 38. It should be noted that the first part 16 of the container 10 is formed with an arcuate wall 54 around the location of the inlet 36 and this wall 54 engages the flow regulating device 40 to isolate the inlet 36 from the passage 48.

Consequently, water supplied to the inlet 36 passes through the nozzle 50 into and around the container 10 and then flows from the container 10 by way of the nozzle 52, the passage 48 and the outlet 38. In order to encourage a swirling flow within the container 10, a plurality of apertures 56 are provided along the length of each of the nozzles 50 and 52. These apertures 56 are provided at intervals around the periphery of each nozzle and are arranged to increase in size towards the tip of each nozzle as indicated in Figures 3 and 5.

Figure 4 shows how the base 12 of the dispenser is formed with a first pair of connectors 58, 58ʹ and a second pair of connectors 60,60ʹ. The connectors 58 are arranged in parallel and, in this instance, carry a pair of connector pieces 62. The connectors 60 are arranged in line and, in this instance, are closed by a pair of plugs 64. The provision of the two pairs of connectors allows the dispenser to be connected into a water system in a manner most suited to the existing pipelines. The connector 58 and the connector 60 are associated with the inlet 36 to the container 10 and the connectors 58ʹ, 60ʹ are associated with the outlet 38 from the container 10. The way in which communication is provided between the connectors 58, 60 and the inlet 36 is the same as the way in which communication is provided between the outlet 38 and the connectors 58ʹ, 60ʹ and therefore the present description will be confined to the communication between the connectors 58, 60 and the inlet 36.

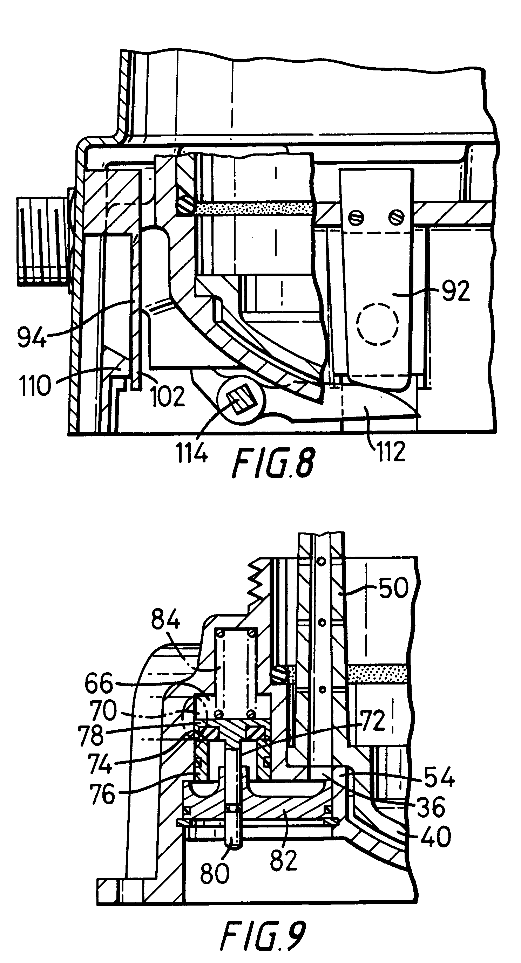

As shown in Figure 4, the connector 58 and the connector 60 communicate with a common chamber 66 in the base 12 by way of respective passages 68, 70. The chamber 66 is connected to the inlet 36 by way of a valve 72, which is shown in Figure 9.

The valve 72 comprises a valve seat 74 provided by an annular member 76 fitted in the chamber 66, and a valve member 78 mounted on a valve stem 80, which is slidably guided in a circular mount 82. The valve member 78 is biassed towards the valve seat 74 by a spring 84. When the valve member 78 is lifted from the valve seat 74 by lifting the valve stem 80, the passages 68 and 70 are brought into communication with the inlet 36 as can be seen in Figure 9.

In a similar fashion, Figure 5 shows how the outlet 38 can be brought into communication with a chamber 66ʹ and passages 68ʹ, 70ʹ by way of a valve 72ʹ.

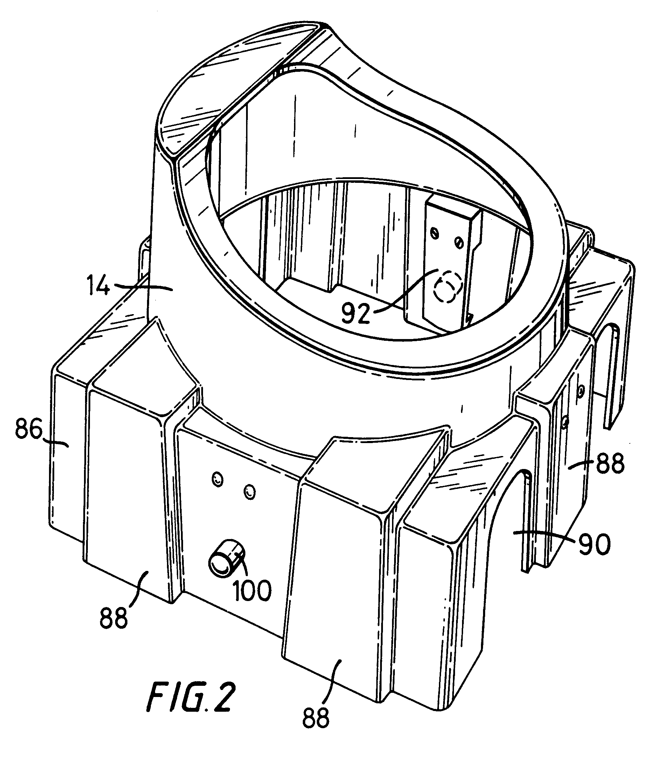

Opening and closing of the valves 72 is controlled by the hood 14 and will now be described with reference to Figures 2 and 6 to 8.

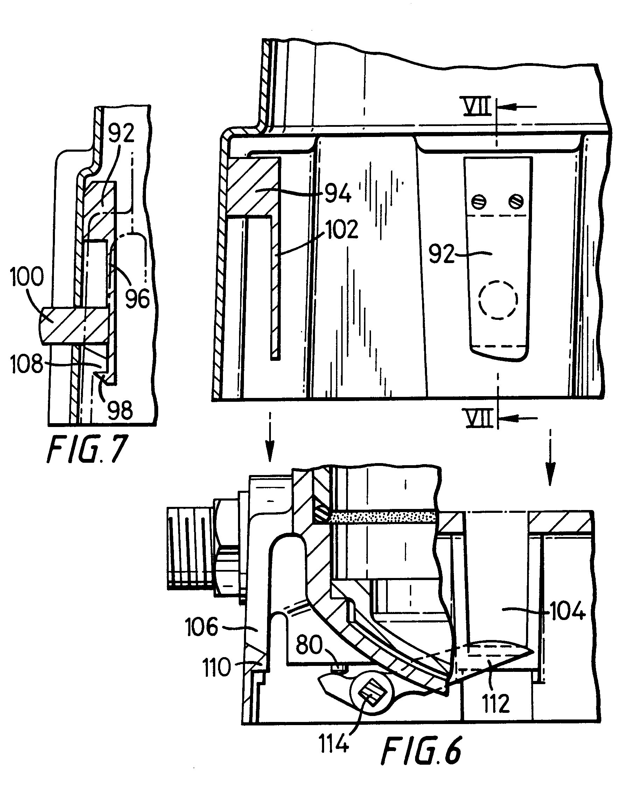

As shown in Figure 2, the hood 14 includes a mounting portion 86 arranged to overlie the base 12. The mounting portion 86 is formed with strengthening ribs 88 and with four slots 90 (only two of which are illustrated) for receiving the connector pieces 62. The portion 86 is also formed with a pair of operating elements 92 and a pair of further operating elements 94. One of the operating elements 92 is shown in Figure 7. As illustrated, this element comprises a flexible arm 96 terminating in an outturned finger 98. A button 100 mounted on the arm 96 projects through the wall of the hood 14 to allow the arm 96 to be flexed from the exterior. One of the further operating elements 94 is shown in Figure 6 and, as illustrated, simply comprises a flexible arm 102.

The base 12 is provided with slots 104, 106 for receiving the elements 92, 94. The arrangement of the elements 92 and 94 on the mounting portion 86 of the hood 14 together with that of the slots 104 and 106 in the base 12, and the arrangement of the slots 90, permits the hood 14 to be mounted on the base 12 in a number of different orientations designed both to suit the manner in which the dispenser is to be connected to existing pipes in a water system and to ensure that the closure plug 34 and the part of the hood 14 covering it are sited at the top of the dispenser in use. This latter facilitates filling of the container 10 and is the reason that the domed sealed part 18 of the container is adjustable relative to the base 12 as mentioned previously.

When the hood 14 is mounted on the base 12 in the orientation shown in the drawings, the operating elements 92 engage within the slots 104 in the base 12 and the further operating elements 94 engage within the slots 106 within the base 12. In the course of assembling the hood 14 and the base 12 together, the flexible arms 96 of the operating elements 92 flex to allow the finger 98 to travel over and engage behind ledges 108 formed on the interior of the base 12. The fingers 98 can be disengaged from the ledges 108 for subsequent removal of the hood 14 by manual application of pressure to the buttons 100. The arms 102 of the further operating elements 94 merely seat against further ledges 110.

As the hood 14 is applied to the base 12, the operating elements 92 come into engagement with two levers 112 mounted adjacent the ends of a bar 114, which is rotatably supported within the base 12. These levers 112 are arranged to act on the valve stems 80. Consequently, as the operating elements 92 engage the levers 112, the levers rotate and, as they rotate, they lift the valve stems 80. This lifts the valve members 78 from the valve seats 74 thus communicating the relevant pair of connectors 58, 60 with the interior of the container 10.

In the event that the desired orientation of the hood 14 relative to the base 12 aligns the elements 94 with the slots 104 and the elements 92 with the slots 106, it will be appreciated that the elements 94 will then serve to operate the levers 112 whereas the elements 92 will then merely perform the function of retaining the hood 14 on the base 12.

Mounting of the hood 14 on the base 12 in any selected orientation therefore opens the valves 72 and removal of the hood 14 from the base 12 closes the valves 72. The valves 72 will thus automatically be closed for and during replenishment of the container 10.

The dispenser descibed above is designed to be mounted on the wall in a kitchen or in some other readily apparent location so that the quantity of silico-phosphate material within the container 10 can be monitored conveniently at all times. For this reason, the hood 14 is designed to have a generally decorative appearance, and the base 12 is formed with mounting means 116 (see Figure 3) for mounting the dispenser on the wall.

## Claims

1. A dispenser for dispensing a water conditioning material into a water system, comprising a replenishable container (10) for receiving the water conditioning material, said container being provided with connectors (58,58',60,60') for connecting the dispenser into a pipeline of the water system, an access opening provided on said container for allowing replenishment of water conditioning material, a closure (34) removably fitted to said access opening, a hood (14) removably fitted to said container to prevent removal of said closure, and valves (72,72') actuable for closing off water flow through the dispenser and between the connectors, thereby in use preventing flow of water through the pipeline, means (112) being provided for actuating said valves in response to removal of said hood, thereby to close off water flow before removal of said closure.

2. A dispenser according to claim 1, wherein said valve actuating means (112) comprises lever linkages and the hood is provided with operating elements (92,94) arranged to act on the valves by way of said lever linkages.

3. A dispenser according to claim 1 or 2, wherein the valves (72,72') are resiliently biased towards a closed condition and are arranged to be held open by the hood (14) when the hood is mounted over the closure (34) for the replenishment opening.

4. A dispenser according to any of claims 1 to 3, further comprising a base (12) on which the replenishable container (10) is supported and which is engageable by the hood (14) for mounting the hood over the closure for the replenishment opening.

5. A dispenser according to claim 4, wherein the replenishable container (10) is adjustable relative to the base (12) for orienting the replenishment opening in a selected position.

6. A dispenser according to claim 4 or 5, wherein the hood (14) is selectively engageable with the base (12) in a plurality of different orientations.

7. A dispenser according to any one of the preceding claims, comprising two pairs of said connectors (58,58';60,60'), each pair being arranged for connecting the container (10) into the water system and the two pairs being disposed for different connection arrangements.

8. A dispenser according to any one of the preceding claims, further comprising a water flow regulating device (40) provided in the replenishable container.

9. A dispenser according to claim 8, wherein the water flow regulating device (40) is in the form of a plate (42) mounted over an inlet (36) to and an outlet (38) from the replenishable container (10), the plate having a first nozzle (50) aligned with the inlet and a second nozzle (52) offset from the outlet and being arranged to cooperate with the wall of the container to form a flow passage (48) from the inlet through the first nozzle to the interior of the container and by way of the second nozzle to the outlet of the container.

10. A dispenser according to claim 9, wherein the two nozzles (50,52) are formed with apertures (56) in their sides.

11. A dispenser according to claim 10, wherein the apertures (56) increase in size towards the tips of the nozzles.

12. A dispenser according to any one of the preceding claims, wherein the replenishable container (10) is transparent.

## Patentansprüche

1. Spender zur Abgabe eines Materials zur Wasserbehandlung in ein Wassersystem, mit einem nachfüllbaren Behälter (10) zur Aufnahme des Materials zur Wasserbehandlung, welcher Behälter Anschlüsse (58,58',60,60') für den Anschluß des Spenders in einer Leitung des Wassersystems, eine an dem Behälter ausgebildete Zugangsöffnung, die das Nachfüllen von Material zur Wasserbehandlung gestattet, einen lösbar an der Zugangsöffnung angebrachten Verschluß (34), eine Haube (14), die lösbar an dem Behälter angebracht ist, um ein Entfernen des Verschlusses zu verhindern, und Ventile (72,72') aufweist, die betätigbar sind, um den Durchstrom von Wasser durch den Spender und zwischen den Anschlüssen zu sperren, wodurch im Betrieb der Durchstrom von Wasser durch die Leitung verhindert wird, wobei Mittel (112) zum Betätigen dieser Ventile bei Entfernen der Haube vorgesehen sind, so daß der Wasserfluß vor dem Entfernen des Verschlusses gesperrt wird.

2. Spender nach Anspruch 1, bei dem die Mittel (112) zur Betätigung der Ventile Hebelgestänge aufweisen und die Haube mit Betätigungselementen (92,94) versehen ist, die dazu eingerichtet sind, über diese Hebelgestänge auf die Ventile zu wirken.

3. Spender nach Anspruch 1 oder 2, bei dem die Ventile (72,72') elastisch in die Schließstellung vorgespannt und dazu eingerichtet sind, durch die Haube (14) offengehalten zu werden, wenn die Haube über dem Verschluß (34) für die Nachfüllöffnung montiert ist.

4. Spender nach einem der Ansprüche 1 bis 3, mit einem Sockel (12), auf dem der nachfüllbare Behälter (10) abgestützt ist und mit dem die Haube (14) in Eingriff gebracht werden kann, um die Haube über dem Verschluß für die Nachfüllöffnung anzubringen.

5. Spender nach Anspruch 4, bei dem der nachfüllbare Behälter (10) in bezug auf den Sockel (12) verstellbar ist, um die Nachfüllöffnung in eine ausgewählte Position auszurichten.

6. Spender nach Anspruch 4 oder 5, bei dem die Haube (14) wahlweise in mehreren verschiedenen Orientierungen mit dem Sockel (12) in Eingriff bringbar ist.

7. Spender nach einem der vorstehenden Ansprüche, mit zwei Paaren der Anschlüsse (58,58';60,60'), wobei jedes Paar für den Anschluß des Behälters (10) in dem Wassersystem eingerichtet ist und die beiden Paare für verschiedene Anschlußkonfigurationen angeordnet sind.

8. Spender nach einem der vorstehenden Ansprüche, mit einer in dem nachfüllbaren Behälter angebrachten Einrichtung (40) zum Regulieren des Wasserflusses.

9. Spender nach Anspruch 8, bei dem die Einrichtung (40) zum Regulieren des Wasserflusses als eine Platte (42) ausgebildet ist, die über einem Einlaß (36) in den nachfüllbaren Behälter und einem Auslaß (38) aus diesem Behälter montiert ist und eine mit dem Einlaß ausgerichtete erste Düse (50) und eine gegenüber dem Auslaß versetzte zweite Düse (52) aufweist und so angeordnet ist, daß sie mit der Wand des Behälters zusammenwirkt und einen Strömungskanal (48) von dem Einlaß durch die erste Düse zum Inneren des Behälters und durch die zweite Düse zum Auslaß des Behälters bildet.

10. Spender nach Anspruch 9, bei dem die beiden Düsen (50,52) mit Öffnungen (56) in ihren Seiten versehen sind.

11. Spender nach Anspruch 10, bei dem die Öffnungen (56) zu den Spitzen der Düsen hin an Größe zunehmen.

12. Spender nach einem der vorstehenden Ansprüche, bei dem der nachfüllbare Behälter (10) transparent ist.

## Revendications

1. Distributeur pour distribuer une matière de conditionnement d'eau dans un système d'eau, comprenant un récipient apte à être ré-approvisionné (10) pour recevoir la matière de conditionnement de l'eau, ledit récipient étant doté de connecteurs (58, 58', 60, 60') pour brancher le distributeur dans une tuyauterie du système d'eau, une ouverture d'accès prévue sur ledit récipient pour permettre le ré-approvisionnement en matière de conditionnement de l'eau, une fermeture (34) fixée de façon libérable à l'ouverture d'accès, un chapeau (14) fixé de façon libérable audit récipient pour empêcher le retrait de ladite fermeture, et des soupapes (72, 72') aptes à être actionnées pour arrêter l'écoulement d'eau à travers le distributeur et entre les connecteurs, empêchant ainsi, en service, l'écoulement d'eau à travers la tuyauterie, des moyens (112) étant prévus pour actionner lesdites soupapes en réponse au retrait dudit chapeau, et arrêter ainsi l'écoulement d'eau avant le retrait de ladite fermeture.

2. Distributeur selon la revendication 1, dans lequel les moyens d'actionnement de soupape (112) comprennent un système de levier et le chapeau est doté d'éléments d'actionnement (92, 94) disposés de façon à agir sur les soupapes au moyen dudit système de levier.

3. Distributeur selon la revendication 1 ou la revendication 2, dans lequel les soupapes (72, 72') sont sollicitées de façon élastique vers une condition fermée et sont disposées de façon à être maintenues ouvertes par le chapeau (14) lorsque ce dernier est monté sur la fermeture (34) de l'ouverture de ré-approvisionnement.

4. Distributeur selon l'une quelconque des revendications 1 à 3, comprenant en outre une base (12) sur laquelle le récipient apte à être ré-approvisionné (10) est supporté et qui est apte à s'engager avec le chapeau (14) pour monter ce dernier sur la fermeture de l'ouverture de réapprovisionnement.

5. Distributeur selon la revendication 4, dans lequel le récipient apte à être ré-approvisionné (10) est réglable par rapport à la base (12) pour orienter l'ouverture de réapprovisionnement dans une position sélectionnée.

6. Distributeur selon la revendication 4 ou la revendication 5, dans lequel le chapeau (14) est apte à s'engager sélectivement avec la base (12) dans plusieurs orientations différentes.

7. Distributeur selon l'une quelconque des revendications précédentes, comprenant deux paires desdits connecteurs (58, 58'; 60, 60'), chaque paire étant disposée de façon à brancher le récipient (10) dans le système d'eau, les deux paires étant disposées en vue de réaliser des systèmes de connexion différents.

8. Distributeur selon l'une quelconque des revendications précédentes, comprenant en outre un dispositif de réglage du débit d'eau (40) prévu dans le récipient apte à être ré-approvisionné.

9. Distributeur selon la revendication 8, dans lequel le dispositif de réglage du débit d'eau (40) se présente sous la forme d'une plaque (42) montée sur une entrée (36) et une sortie (38) du récipient apte à être ré-approvisionné (10), la plaque comportant une première buse (50) alignée avec l'entrée et une seconde buse (52) décalée par rapport à la sortie et disposée de façon à coopérer avec la paroi du récipient pour former un passage d'écoulement (48) partant de l'entrée, traversant la première buse et atteignant l'intérieur du récipient et, au moyen de la seconde buse, la sortie du récipient.

10. Distributeur selon la revendication 9, dans lequel les deux buses (50, 52) comportent des ouvertures (56) ménagées dans leurs côtés.

11. Distributeur selon la revendication 10, dans lequel les ouvertures (56) présentent des dimensions allant en augmentant vers les extrémités des buses.

12. Distributeur selon l'une quelconque des revendications précédentes, dans lequel le récipient apte à être ré-approvisionné (10) est transparent.
